# EUROPEAN PATENT APPLICATION

(11) **EP 4 650 195 A1**
(43) Date of publication of application: **19.11.2025**
(21) Application number: 23915824.9
(22) Date of filing: 28.12.2023
(51) Int. Cl.: B60H 1/00

(54) **THERMAL MANAGEMENT SYSTEM**

(30) Priority: 10.01.2023 CN 202320074115 U
(71) Applicant: Valeo Systemes Thermiques, 78320 Le Mesnil Saint Denis (FR)
(72) Inventor: WAN, Xuanchen, Jingzhou, Hubei 434000 (CN); WANG, Wenfeng, Jingzhou, Hubei 434000 (CN); JIANG, Yunfei, Jingzhou, Hubei 434000 (CN)
(74) Representative: Valeo Powertrain Systems
(86) International application number: PCT/CN2023/142553
(87) International publication number: WO 2024/149071

(57) **Abstract**

A thermal management system, comprising: a first fluid circuit (C1), which has a first heat exchanger (2); a second fluid circuit (C2), which has a second working device (15) for heating and a radiator (12); and a third fluid circuit (C3), which has a third working device (16) for heating and a third heat exchanger (8). The first fluid circuit (C1) is provided with a first communicating structure (17) and a second communicating structure (23). A first port (c) of a multi-way valve (18) is connected to a pipeline on one side of the second working device (15), and a second port (h) of the multi-way valve (18) is connected to a pipeline on the other side of the second working device (15) via the radiator (12). A third port (b) of the multi-way valve (18) is connected to one side of the third working device (16), a fourth port (a) is connected to the other side of the third working device (16), a fifth port (m) is connected to one side of the third heat exchanger (8), and a sixth port (k) is connected to the other side of the third heat exchanger (8). A seventh port (g) of the multi-way valve (18) is connected to a pipeline on the other side of the second working device (15) and bypasses the radiator (12). The thermal management system uses a combination of a seven-way valve and a three-way structure or a ten-way valve to realize various thermal management modes, and involves the use of only four operating states of a valve assembly. Thus, the thermal management system is easy to control, and pipeline connections are greatly simplified.

## Description

### Technical Field

The present disclosure relates to a thermal management system for a vehicle.

### Background Art

As environmental protection is taken ever more seriously, the use of electric vehicles is becoming more and more widespread. Electric vehicles store electrical energy for endurance and driving, so users can perform operations such as charging directly at home.

To ensure vehicle safety and a comfortable traveling experience, thermal management of the traction battery and cabin of the motor vehicle is necessary when the temperature is high or low, to help keep the traction battery and cabin at a suitable temperature. For example, the battery cannot be allowed to remain in a low-temperature state for a long period of time, resulting in pointless loss of charge, and the battery cannot be allowed to remain in a high-temperature state for a long period of time, so as to avoid an explosion that would endanger personal safety. Thermal management systems of existing electric vehicles are capable of realizing a large number of modes, and use a large number of components and complex pipeline routing, so have a high cost and a large volume, with poor flexibility in thermal management.

### Summary of the Invention

Thus, the object of the present disclosure is to provide a thermal management system for a vehicle, the thermal management system having a simple structure and being able to realize a large number of modes which can be switched conveniently and freely, and using an intermediate heat exchanger to improve cooling mode performance.

The present disclosure provides a thermal management system for a vehicle, the thermal management system comprising:
a first fluid circuit, the first fluid circuit having a first heat exchanger;
a second fluid circuit, the second fluid circuit having a heat-generating second working device and a radiator; and
a third fluid circuit, the third fluid circuit having a heat-generating third working device and a third heat exchanger,
wherein the first fluid circuit is provided with a first connection structure and a second connection structure located downstream of the first connection structure, one port of the first connection structure being connected to a pipeline of the second fluid circuit at one side of the second working device, and one port of the second connection structure being connected to a pipeline of the second fluid circuit at another side of the second working device, and
a multi-way valve is provided between the second fluid circuit and the third fluid circuit, wherein:
   a first port of the multi-way valve is connected to a pipeline at said one side of the second working device, a second port of the multi-way valve is connected via the radiator to a pipeline at said other side of the second working device,
   a third port of the multi-way valve is connected to one side of the third working device, a fourth port is connected to another side of the third working device, a fifth port is connected to one side of the third heat exchanger, a sixth port is connected to another side of the third heat exchanger, and
   a seventh port of the multi-way valve is connected to a pipeline at said other side of the second working device and bypasses the radiator.

In an embodiment, the second connection structure comprises a three-way connector and a one-way valve, one port of the three-way connector being connected via the one-way valve to a pipeline at said other side of the second working device, the one-way valve allowing fluid to flow in one direction from the second fluid circuit toward the first fluid circuit.

In an embodiment, the multi-way valve has a first operating state. In the first operating state, the first port and the second port of the multi-way valve are connected to each other, the third port and the sixth port of the multi-way valve are connected to each other, the fourth port and the fifth port of the multi-way valve are connected to each other, and the seventh port of the multi-way valve is closed.

In an embodiment, the multi-way valve has a second operating state. In the second operating state, the first port and the third port of the multi-way valve are connected to each other, the second port and the sixth port of the multi-way valve are connected to each other, the fourth port and the fifth port of the multi-way valve are connected to each other, and the seventh port of the multi-way valve is closed.

In an embodiment, the multi-way valve has a third operating state. In the third operating state, the first port and the third port of the multi-way valve are connected to each other, the seventh port and the sixth port of the multi-way valve are connected to each other, the fourth port and the fifth port of the multi-way valve are connected to each other, and the second port of the multi-way valve is closed.

In an embodiment, the multi-way valve has a fourth operating state. In the fourth operating state, the first port and the fifth port of the multi-way valve are connected to each other, the second port and the sixth port of the multi-way valve are connected to each other, the fourth port and the third port of the multi-way valve are connected to each other, and the seventh port of the multi-way valve is closed.

In an embodiment, the first connection structure and the multi-way valve are integrated as a ten-way valve.

In an embodiment, first to seventh ports of the ten-way valve correspond to the first to seventh ports of the multi-way valve.

In an embodiment, the ten-way valve further comprises an eighth port, a ninth port and a tenth port, the eighth port and the ninth port being connected to the first fluid circuit, and the tenth port being connected to a pipeline of the second fluid circuit at said other side of the second working device.

In an embodiment, the first heat exchanger is a water-cooled condenser of a refrigerant circuit of the thermal management system.

In an embodiment, the first fluid circuit further comprises a water heater and a warm air device.

In an embodiment, the second working device is a motor assembly, and the third working device is a battery assembly.

The present disclosure further provides a vehicle, comprising the thermal management system described above.

The thermal management system of the present disclosure realizes multiple thermal management modes using a combination of a seven-way valve and a three-way structure, or using a ten-way valve, and only uses four operating states of a valve assembly. Thus, control of the thermal management system is simple, and the pipeline connections are greatly simplified.

### Brief Description of the Drawings

**In** order to explain the technical solution in embodiments of the present disclosure more clearly, the drawings accompanying embodiments of the present disclosure are briefly described below. The drawings are merely used to illustrate some embodiments of the present disclosure, without limiting all embodiments of the present disclosure to this. In the drawings:
Fig. 1 shows a schematic diagram of connections of a thermal management system for a vehicle according to an embodiment of the present disclosure;
Fig. 2 shows a schematic diagram of an AC mode of a thermal management system for a vehicle according to an embodiment of the present disclosure;
Fig. 3 shows a schematic diagram of an AC-heat exchanger mode of a thermal management system for a vehicle according to an embodiment of the present disclosure;
Fig. 4 shows a schematic diagram of a heat exchanger mode of a thermal management system for a vehicle according to an embodiment of the present disclosure;
Fig. 5 shows a schematic diagram of a heat pump dehumidification mode of a thermal management system for a vehicle according to an embodiment of the present disclosure;
Fig. 6 shows a schematic diagram of a heat pump mode of a thermal management system for a vehicle according to an embodiment of the present disclosure;
Fig. 7 shows a schematic diagram of a waste heat recovery mode of a thermal management system for a vehicle according to an embodiment of the present disclosure;
Fig. 8 shows a schematic diagram of an HVWH battery heating mode of a thermal management system for a vehicle according to an embodiment of the present disclosure;
Fig. 9 shows a schematic diagram of a series connection mode of a thermal management system for a vehicle according to an embodiment of the present disclosure;
Fig. 10 shows a schematic diagram of connections of a thermal management system for a vehicle according to another embodiment of the present disclosure;
Fig. 11 shows a schematic diagram of an AC mode of a thermal management system for a vehicle according to an embodiment of the present disclosure;
Fig. 12 shows a schematic diagram of an AC-heat exchanger mode of a thermal management system for a vehicle according to an embodiment of the present disclosure;
Fig. 13 shows a schematic diagram of a heat exchanger mode of a thermal management system for a vehicle according to an embodiment of the present disclosure;
Fig. 14 shows a schematic diagram of a heat pump dehumidification mode of a thermal management system for a vehicle according to an embodiment of the present disclosure;
Fig. 15 shows a schematic diagram of a heat pump mode of a thermal management system for a vehicle according to an embodiment of the present disclosure;
Fig. 16 shows a schematic diagram of a waste heat recovery mode of a thermal management system for a vehicle according to an embodiment of the present disclosure;
Fig. 17 shows a schematic diagram of an HVWH battery heating mode of a thermal management system for a vehicle according to an embodiment of the present disclosure;
Fig. 18 shows a schematic diagram of a series connection mode of a thermal management system for a vehicle according to an embodiment of the present disclosure; and
Figs. 19 and 20 show schematic diagrams of a thermal management system for a vehicle according to an embodiment of the present disclosure, showing a coolant four-way valve and a coolant heat exchanger.

### Detailed Description of Embodiments

In order to clarify the technical solution objective, the technical solution and advantages of the present disclosure, the technical solution of embodiments of the present disclosure is described clearly and completely below in conjunction with the drawings accompanying particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects listed after the word and equivalents thereof, without excluding other elements or objects. Words such as "connection" or "communication", rather than being limited to the physical or mechanical connection or communication shown in a drawing, may include connection or communication equivalent thereto, irrespective of whether it is direct or indirect. The terms "upper", "lower", "left", "right" and the like are only used to indicate a relative positional relationship, and when the absolute position of a described object changes, the relative positional relationship may also change accordingly.

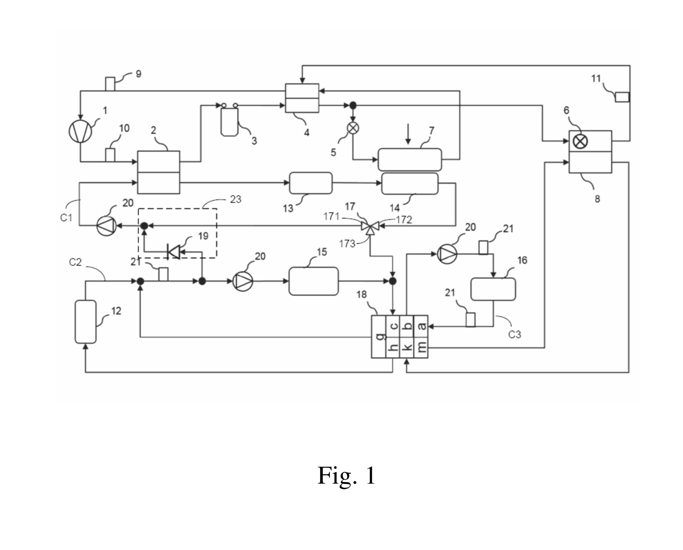

Various embodiments of a thermal management system for a vehicle according to embodiments of the present disclosure are described in detail below with reference to Figs. 1 - 18.

As shown in Fig. 1, in an embodiment of the present disclosure, a vehicle such as an electric vehicle comprises a thermal management system for cooling, heating, etc. of a passenger cabin, a battery and a drive means of the vehicle. The connection relationships among components in the thermal management system are shown schematically in Fig. 1.

As shown in Fig. 1, the thermal management system comprises a first fluid circuit C1, a second fluid circuit C2 and a third fluid circuit C3. A cooling liquid, such as a liquid mixture of water and ethanol, circulates in the first fluid circuit C1, the second fluid circuit C2 and the third fluid circuit C3.

In addition, the thermal management system further comprises a refrigerant circuit in which a refrigerant such as Freon circulates. The refrigerant circuit may have a compressor 1, which can compress the refrigerant to form high-temperature, high-pressure refrigerant. The refrigerant circuit also has a first heat exchanger 2, an intermediate heat exchanger (IHX) 4 and an evaporator 7. The high-temperature, high-pressure refrigerant outputted by the compressor undergoes heat exchange in the first heat exchanger 2 to obtain high-temperature refrigerant, the high-temperature refrigerant undergoes heat exchange in the intermediate heat exchanger 4 to obtain medium-temperature refrigerant, the low-temperature refrigerant enters the evaporator 7 to absorb heat through evaporation, and low-temperature refrigerant thus obtained flows back to the compressor 1 via the intermediate heat exchanger 4. The first heat exchanger 2 may be a water-cooled condenser. A drying bottle 2, for filtering impurities in the refrigerant and drying the environment, may be provided between the first heat exchanger 2 and the intermediate heat exchanger 4. A first valve 5, for example an expansion valve, may be provided between the intermediate heat exchanger 4 and the evaporator 7. The refrigerant circuit also has a second valve 6, the function of the second valve 6 being to cause expansion of the refrigerant by throttling, and the function of a third heat exchanger 8 is to allow refrigerant and cooling liquid flowing therethrough to undergo heat exchange. Specifically, when cooling of a battery and/or a drive mechanism is required, refrigerant is throttled by the second valve 6 and expands, then enters the third heat exchanger 8 to absorb heat through evaporation, thereby reducing the temperature of cooling liquid flowing through the third heat exchanger 8. The cooled cooling liquid then flows through the battery and/or the drive mechanism, to cool the battery and/or the drive mechanism. Low-temperature refrigerant obtained by heat exchange in the intermediate heat exchanger 4 can flow to the second valve 6, be throttled in the second valve 6 to expand, and absorb heat through evaporation in the third heat exchanger 8. The third heat exchanger 8 has a first flow path and a second flow path in which refrigerant and cooling liquid circulate, respectively. The refrigerant then flows back to the intermediate heat exchanger 4, and flows further to the compressor 1. The refrigerant circuit also has various sensors 9, 10, 11, for measuring temperature or pressure of refrigerant. For example, the sensor 9 may be arranged on a pipeline of an input end of the compressor 1. The sensor 10 may be arranged between the compressor 1 and the first heat exchanger 2. The sensor 11 may be arranged between the second valve 6 and the intermediate heat exchanger 4.

The first fluid circuit C1 comprises the first heat exchanger 2, the first heat exchanger 2 being the water-cooled condenser of the refrigerant circuit mentioned above. The first fluid circuit C1 further comprises a water heater 13 and a warm air device 14. An output end of the water heater 13 is connected to an input end of the warm air device 14. The water heater 13 is used to heat cooling liquid flowing therethrough. The water heater 13 and the warm air device 14 may be used to heat the passenger cabin of the vehicle. When the passenger cabin needs to be heated, if the temperature of warm air blown out by the warm air device 14 fails to reach the temperature set by the user, the water heater 13 can also be switched on to heat the cooling liquid, to increase the temperature of the cooling liquid flowing to the warm air device 14, thus helping to increase the temperature of the warm air, and accelerating the rise in temperature of the passenger cabin. In addition, the first fluid circuit C1 further comprises a pump 20, arranged on a pipeline of an input end of the first heat exchanger 2.

The second fluid circuit C2 has a heat-generating second working device 15 and a radiator 12. The second working device 15 may be a motor assembly, which for example comprises an electric motor and a microcontroller unit (MCU), etc. The radiator 12 is for example a low-temperature radiator, for transmitting heat to the outside or absorbing heat from the outside. In addition, the second fluid circuit C2 also has a pump 20, arranged on a pipeline of an input end of the second working device 15, and used to pump cooling liquid to flow through the second working device 15. A sensor 21 is also provided on the second fluid circuit C2, for measuring the temperature of cooling liquid flowing therethrough.

The third fluid circuit C3 has a heat-generating third working device 16 and a third heat exchanger 8. The third working device 16 may be a battery assembly. The third heat exchanger 8 is for example a chiller, i.e. a battery chiller. In addition, the third fluid circuit C3 also has a pump 20 and sensors 21. The pump 20 may be arranged at an input end of the third working device 16. The sensors 21 are used for measuring the temperature of cooling liquid flowing therethrough, and may be respectively arranged on pipelines of the input end and an output end of the third working device 16.

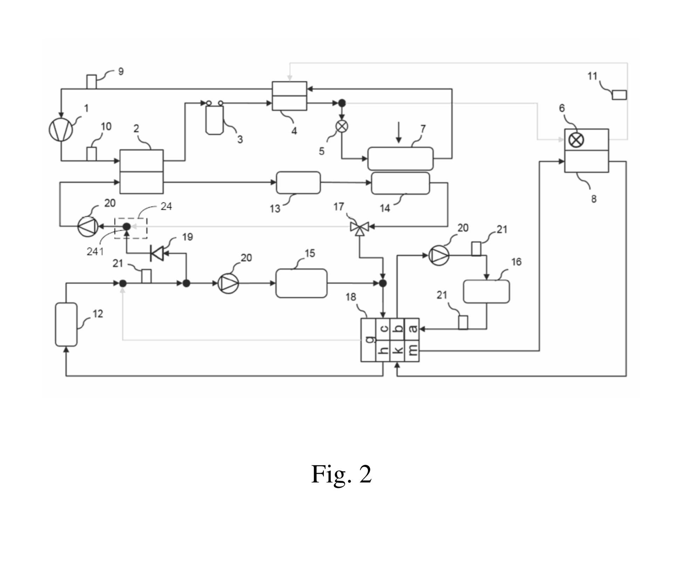

As shown in Fig. 1, the first fluid circuit C1 is provided with a first connection structure 17, and a second connection structure 23 located downstream of the first connection structure 17. The first connection structure 17 may be a three-way structure, specifically a three-way valve. The second connection structure 23 may also be a three-way structure. One port 173 of the first connection structure 17 is connected to a pipeline of the second fluid circuit C2 at one side of the second working device 15, and one port of the second connection structure 23 is connected to a pipeline of the second fluid circuit C2 at another side of the second working device 15. The first connection structure 17, which is a three-way structure, comprises a first port 171, a second port 172 and a third port 173, wherein the first port 171 and the second port 172 are connected to the first fluid circuit C1, the first port 171 being connected to a pipeline at the input end of the first heat exchanger 2, and the second port 172 being connected to a pipeline at an output end of the warm air device 14; the third port 173, as stated above, is connected to the pipeline of the second fluid circuit C2 at one side of the second working device 15. For example, the second connection structure may comprise a three-way connector 24 and a one-way valve 19. As shown in Fig. 2, one port 241 of the three-way connector 24 is connected via the one-way valve 19 to the pipeline at the other side of the second working device 15; the one-way valve 19 allows fluid to flow in one direction from the second fluid circuit C2 toward the first fluid circuit C1.

A multi-way valve 18 is provided between the second fluid circuit and the third fluid circuit. For example, the multi-way valve 18 is a seven-way valve. A first port c of the multi-way valve 18 is connected to the pipeline at one side of the second working device 15. A second port h of the multi-way valve 18 is connected via the radiator 12 to the pipeline at the other side of the second working device 15. A third port b of the multi-way valve 18 is connected to one side of the third working device 16, a fourth port a is connected to another side of the third working device 16, a fifth port m is connected to one side of the third heat exchanger 8, and a sixth port k is connected to another side of the third heat exchanger 8. A seventh port g of the multi-way valve 18 is connected to the pipeline at the other side of the second working device 15, and bypasses the radiator 12.

The multi-way valve 18 may have four operating states, namely a first operating state, a second operating state, a third operating state and a fourth operating state.

In the first operating state, the first port c and the second port h of the multi-way valve 18 are connected to each other, the third port b and the sixth port k of the multi-way valve 18 are connected to each other, the fourth port a and the fifth port m of the multi-way valve 18 are connected to each other, and the seventh port g of the multi-way valve is closed.

In the second operating state, the first port c and the third port b of the multi-way valve 18 are connected to each other, the second port h and the sixth port k of the multi-way valve 18 are connected to each other, the fourth port a and the fifth port m of the multi-way valve 18 are connected to each other, and the seventh port g of the multi-way valve 18 is closed.

In the third operating state, the first port c and the third port b of the multi-way valve 18 are connected to each other, the seventh port g and the sixth port k of the multi-way valve 18 are connected to each other, the fourth port a and the fifth port m of the multi-way valve 18 are connected to each other, and the second port h of the multi-way valve 18 is closed.

In the fourth operating state, the first port c and the fifth port m of the multi-way valve 18 are connected to each other, the second port h and the sixth port k of the multi-way valve 18 are connected to each other, the fourth port a and the third port b of the multi-way valve 18 are connected to each other, and the seventh port g of the multi-way valve 18 is closed.

Various operating modes of the thermal management system according to an embodiment of the present disclosure are described below with reference to Figs. 2 - 9.

As shown in Fig. 2, the thermal management system is in an AC mode or an AC dehumidification mode. In this mode, refrigerant flowing through the first valve 5 is throttled and expands, and flows into the evaporator 7 to absorb heat through evaporation; no refrigerant flows through the third heat exchanger 8. The refrigerant absorbs heat through evaporation in the evaporator 7, and air flowing through the evaporator is cooled and then enters the passenger cabin to cool the passenger cabin, thus lowering the temperature of the passenger cabin, to realize cooling of the passenger cabin. In this mode, the multi-way valve 18 is in the first operating state; the third heat exchanger 8 and the third working device 16 are connected in series in the third fluid circuit C3, and at this time the third heat exchanger 8 is only used to cool the third working device 16. In addition, cooling liquid of the first fluid circuit C1 passes through the first connection structure 17 and the first port c and second port h of the multi-way valve 18, and then flows to the second fluid circuit C2; heat can be dissipated to the outside by the radiator 12. The pump 20 on the second fluid circuit C2 is switched on; a portion of cooling liquid flows to the second working device 15 to cool same, and another portion of cooling liquid flows back to the first fluid circuit C1 through the second connection structure 23.

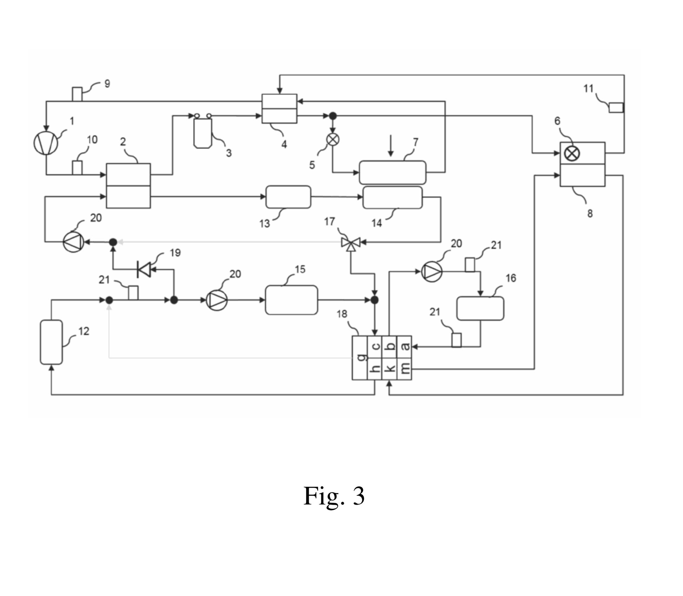

As shown in Fig. 3, the thermal management system is in an AC-heat exchanger mode. In this mode, a portion of refrigerant is throttled by the first valve 5 and expands, then flows into the evaporator 7, and absorbs heat through evaporation in the evaporator 7; another portion of refrigerant is throttled by the second valve 6 and expands, then flows into the third heat exchanger 8, and absorbs heat through evaporation in the third heat exchanger 8. In this mode, the multi-way valve 18 is in the first operating state; the third heat exchanger 8 is connected in series with the third working device 16 in the third fluid circuit C3, and used to cool the third working device 16, recovering heat of the third working device 16 to the refrigerant circuit.

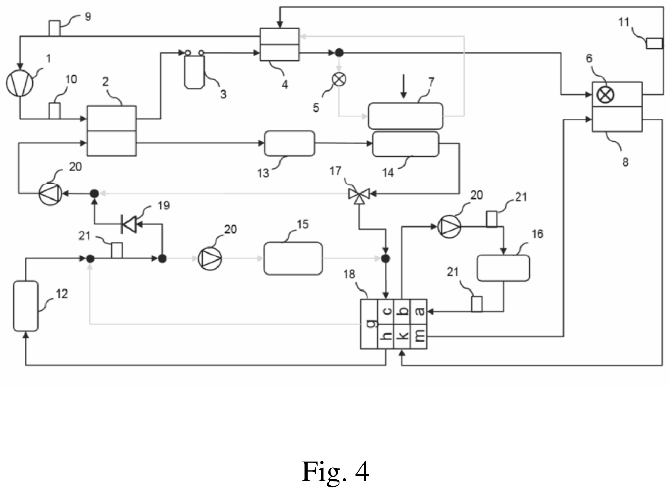

As shown in Fig. 4, the thermal management system is in a heat exchanger mode. In this mode, all of the refrigerant flows to the third heat exchanger 8; no refrigerant flows through the evaporator 7, i.e. the passenger cabin has no cooling demand, and the vehicle air conditioning is not operating. Generally, the battery of the vehicle is charged in this mode. In this mode, the multi-way valve 18 is in the first operating state; the third heat exchanger 8 is connected in series with the third working device 16 in the third fluid circuit C3, and used to cool the third working device 16, recovering heat of the third working device 16 to the refrigerant circuit. The pump 20 in the second fluid circuit C2 in Fig. 4 may be switched on, or not switched on. When the pump 20 in the second fluid circuit C2 is switched on, cooling liquid flows through the second working device 15 to cool same. When the pump 20 in the second fluid circuit C2 is not switched on, the second working device 15 does not need to dissipate heat (when the vehicle is stopped for example), and cooling liquid does not flow through the second working device 15.

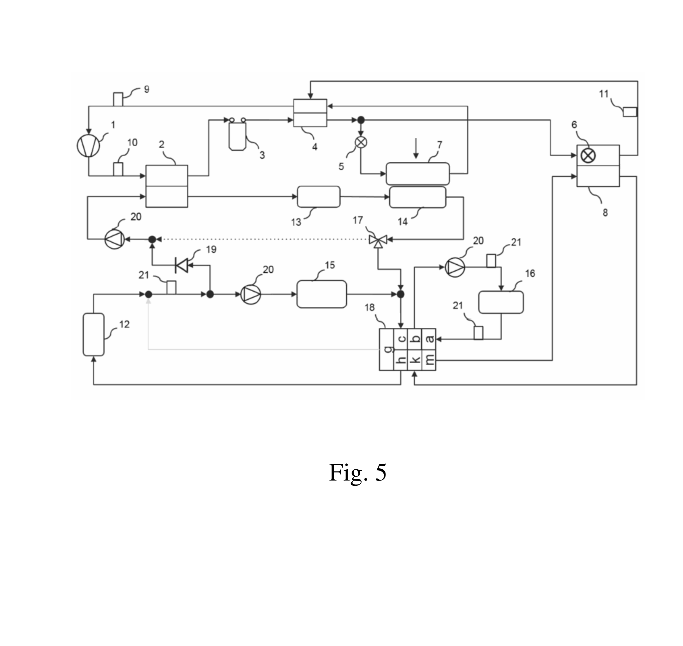

As shown in Fig. 5, the thermal management system is in a heat pump dehumidification mode. In this mode, a portion of refrigerant flows to the evaporator 7, and another portion flows through the third heat exchanger 8. Specifically, in heat pump mode, when high-temperature, high-pressure refrigerant that has been compressed by the compressor flows through the water-cooled condenser 2, it undergoes heat exchange with cooling liquid flowing through the water-cooled condenser, causing the cooling liquid to heat up; the heated cooling liquid flows through the warm air device 14, and heats up air that has been cooled and dehumidified by the evaporator, thus realizing the heat pump dehumidification mode. In the heat pump dehumidification mode, when the temperature of the cooling liquid is inadequate, the water heater will be additionally switched on to provide supplementary heating. Air entering the passenger cabin undergoes the process of cooling and dehumidification in the evaporator 7 and is then heated by the warm air device 14. In this mode, the multi-way valve 18 is in the second operating state; cooling liquid from the first fluid circuit C1 flows via the first connection structure 17 to the first port c of the multi-way valve 18, then flows through the third port b to the third fluid circuit C3, specifically to the third working device 16; the cooling liquid then flows via the fourth port a and the fifth port m to the third heat exchanger 8, then flows via the sixth port k and the second port h to the second fluid circuit C2. Heat generated by the second working device 15 and the third working device 16 is transferred to the refrigerant circuit via the third heat exchanger 8. In addition, the third heat exchanger 8 can absorb heat from the outside via the radiator 12. The dotted line between the pump 20 in the first fluid circuit C1 and the first connection structure 17 means that a pipeline therebetween may be opened, or not opened.

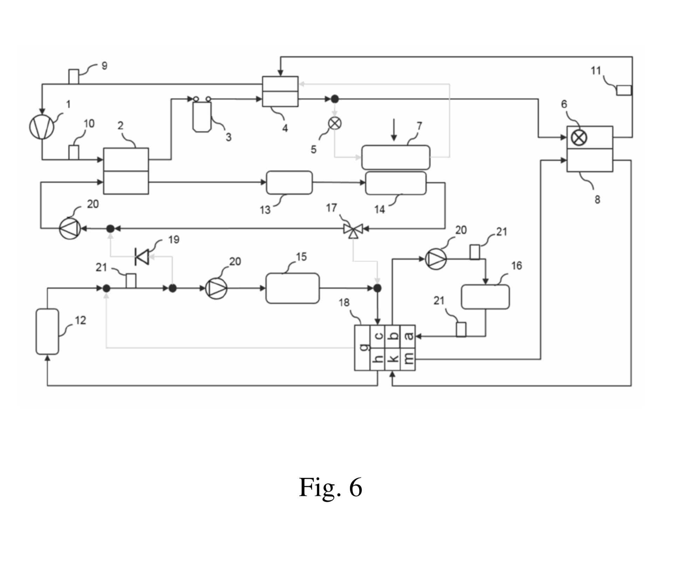

As shown in Fig. 6, the thermal management system is in a heat pump mode; this mode may also be called a motor waste heat recovery mode or a motor self-heating mode. In this mode, refrigerant only flows through the third heat exchanger 8; no refrigerant flows through the evaporator 7. In addition, the third port 173 of the first connection structure 17 is closed, and the one-way valve 19 of the second connection structure 23 is in a one-way open state; here, since the third port 173 of the first connection structure 17 is closed, cooling liquid in the second circuit cannot flow into the first circuit via the one-way valve 19. In this mode, the multi-way valve 18 is in the fourth operating state; cooling liquid in the second fluid circuit C2 flows through the third heat exchanger 8 and then returns to the second fluid circuit C2, so heat generated by the second working device 15 comprising the electric motor can be transferred to the refrigerant circuit at the third heat exchanger 8. The third heat exchanger 8 can also absorb heat from the outside via the radiator 12. In addition, cooling liquid in a circuit where the third working device 16 is located forms its own cycle.

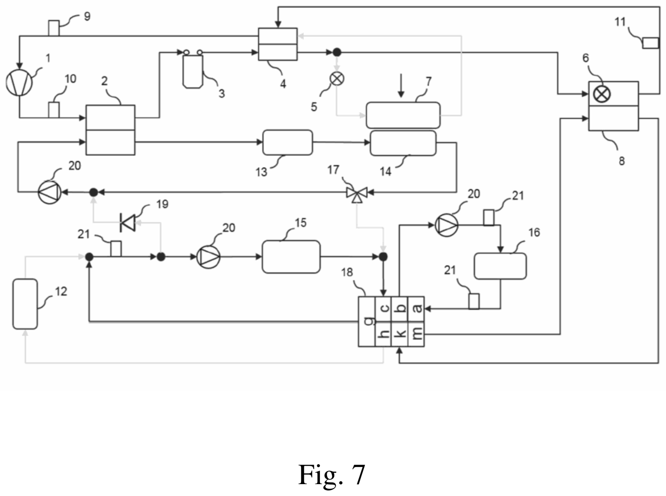

As shown in Fig. 7, the thermal management system is in a waste heat recovery mode. In this mode, refrigerant only flows through the third heat exchanger 8; no refrigerant flows through the evaporator 7. In addition, the third port 173 of the first connection structure 17 is closed, and the one-way valve 19 of the second connection structure 23 is in a one-way open state; here, since the third port 173 of the first connection structure 17 is closed, cooling liquid in the second circuit cannot flow into the first circuit via the one-way valve 19. In this mode, the multi-way valve 18 is in the third operating state, so the radiator 12 is bypassed. Heat generated by the second working device 15 comprising the electric motor and heat generated by the third working device 16 is transferred to the refrigerant circuit at the third heat exchanger 8, then the recovered heat is transferred to the first circuit via the water-cooled condenser, and air flowing into the cabin is heated by the warm air device, thus recycling waste heat of the second working device 15.

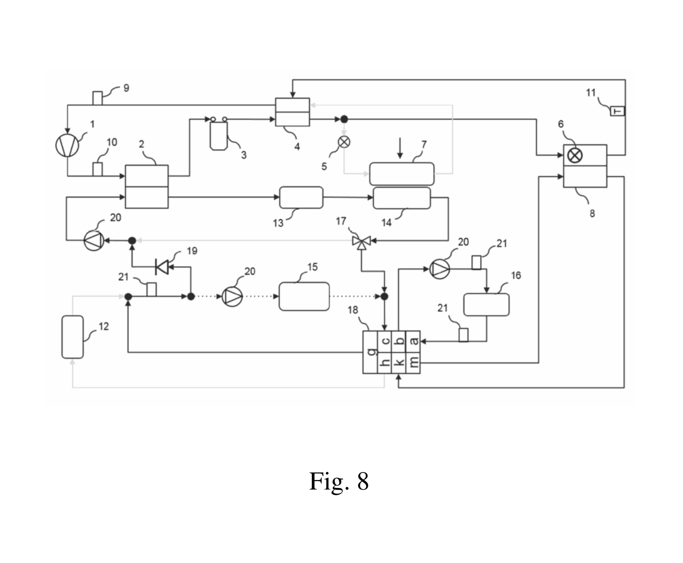

As shown in Fig. 8, the thermal management system is in a HVWH battery heating mode; HVWH is an abbreviation for High Voltage Water Heater. In this mode, the refrigerant circuit can select an operating state according to requirements; refrigerant only flows through the third heat exchanger 8, with no refrigerant flowing through the evaporator 7. In this mode, the multi-way valve 18 is in the third operating state, so the radiator 12 is bypassed. In Fig. 8, the third port 173 of the first connection structure 17 is open, and the one-way valve 19 of the second connection structure 23 is open. Thus, cooling liquid heated by the water heater 13 can flow to the third fluid circuit C3 to heat the third working device 16. The dotted line in the figure means that the pump 20 on the second fluid circuit C2 can be opened as needed, so as to convey cooling liquid to the second working device 15 to heat same.

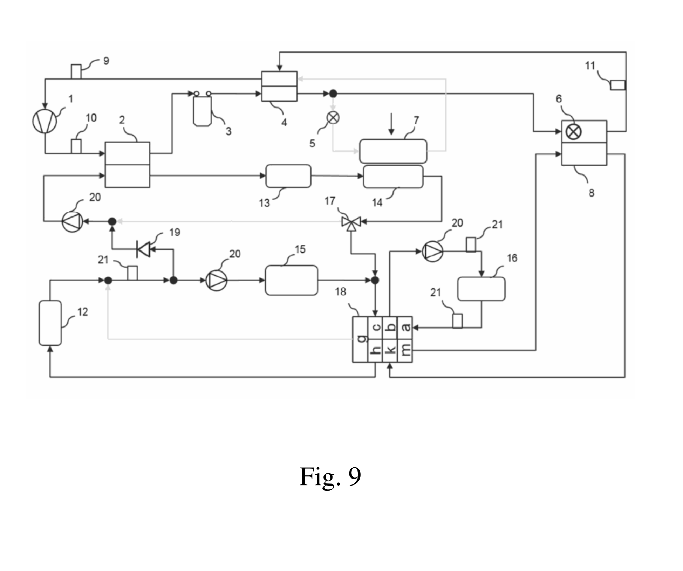

As shown in Fig. 9, the thermal management system is in a series connection mode. In this mode, refrigerant only flows through the third heat exchanger 8; no refrigerant flows through the evaporator 7. In this mode, the second working device 15, the third working device 16, the third heat exchanger 8 and the radiator 12 are connected in series in a fluid circuit. In this mode, the multi-way valve 18 is in the second operating state. Heat generated by the second working device 15 comprising the electric motor and heat generated by the third working device 16 can be transferred to the refrigerant circuit at the third heat exchanger 8. In addition, the third heat exchanger 8 also absorbs heat from the outside via the radiator 12.

As described above, the thermal management system in embodiments of the present disclosure uses a seven-way valve and three-way structures to switch from mode to mode, wherein the seven-way valve need only be provided with four operating states in order to realize multiple thermal management modes; thus, control of the thermal management system is simple, and the pipeline connections are greatly simplified.

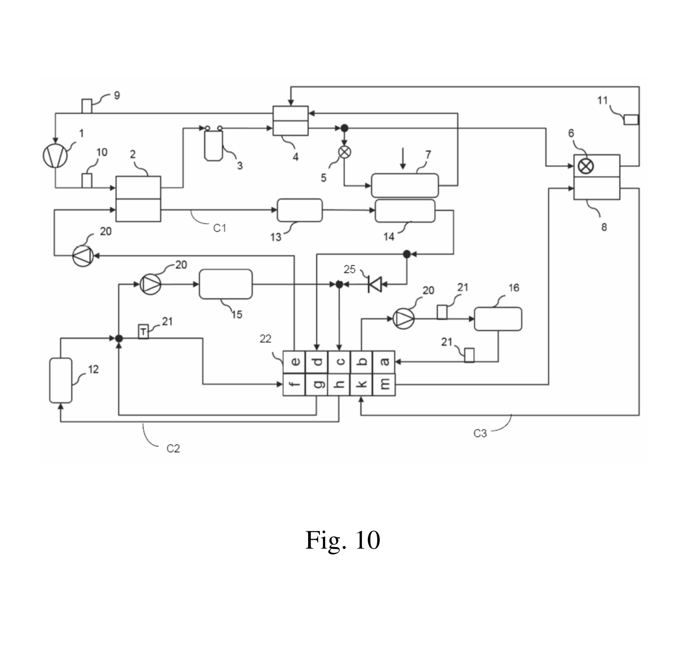

Fig. 10 shows a thermal management system for a vehicle according to another embodiment of the present disclosure. The refrigerant circuit of the thermal management system is essentially the same as the refrigerant circuit shown in Fig. 1, so is not described again here. As shown in Fig. 10, the thermal management system comprises a first fluid circuit C1, a second fluid circuit C2 and a third fluid circuit C3. A cooling liquid, such as a liquid mixture of water and ethanol, circulates in the first fluid circuit C1, the second fluid circuit C2 and the third fluid circuit C3. The devices provided in the first fluid circuit C1, the second fluid circuit C2 and the third fluid circuit C3 are as described above in relation to Fig. 1, so are not described again here.

The first connection structure 17 and the multi-way valve 18 provided between the second fluid circuit and the third fluid circuit in Fig. 1 are integrated as, or replaced with, a ten-way valve 22 in Fig. 10. First to seventh ports of the ten-way valve 22 correspond to the first to seventh ports of the multi-way valve 18. That is, a first port c, a second port h, a third port b, a fourth port a, a fifth port m, a sixth port k and a seventh port g of the ten-way valve 22 respectively correspond to the first port c, the second port h, the third port b, the fourth port a, the fifth port m, the sixth port k and the seventh port g of the multi-way valve 18. The ten-way valve 22 further comprises an eighth port e, a ninth port d and a tenth port f. The eighth port e and the ninth port d are connected to the first fluid circuit C1; the eighth port e is connected to the pipeline at the input end of the first heat exchanger 2, and the ninth port d is connected to the pipeline at the output end of the warm air device 14. The tenth port f is connected to the pipeline of the second fluid circuit C2 at the other side of the second working device 15.

Similar to the multi-way valve 18 that is a seven-way valve, the ten-way valve 22 also has four operating states, namely a first operating state, a second operating state, a third operating state and a fourth operating state. The connection states of the first to seventh ports of the ten-way valve 22 in these four operating states are the same as those of the first to seventh ports of the multi-way valve 18. In addition, the tenth port f of the ten-way valve 22 is in an open state in the first, second and third operating states, and in a closed state when in the fourth operating state.

In addition, the first fluid circuit C1 is connected to the first port c of the ten-way valve 22 via another one-way valve 25.

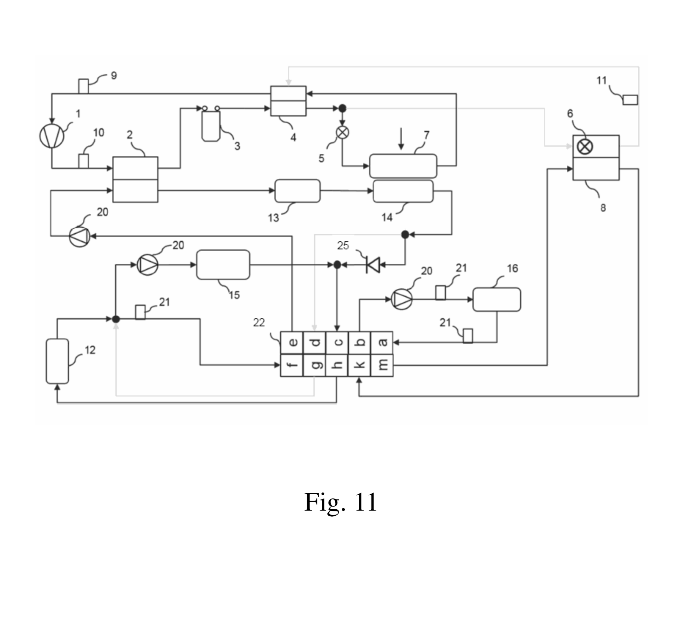

Various operating modes of the thermal management system according to another embodiment of the present disclosure are described below with reference to Figs. 11 - 18.

As shown in Fig. 11, the thermal management system is in an AC mode or an AC dehumidification mode. In this mode, the first valve 5 is in a throttling state, and all of the refrigerant flows to the evaporator 7, with no refrigerant flowing through the third heat exchanger 8. The refrigerant absorbs heat through evaporation in the evaporator 7, thus lowering the temperature of the passenger cabin, to realize cooling of the passenger cabin. In this mode, the ten-way valve 22 is in the first operating state, i.e. the first port c and the second port h are connected to each other, the third port b and the sixth port k are connected to each other, the fourth port a and the fifth port m are connected to each other, and the seventh port g is closed. In addition, the ninth port d is closed, and the eighth port e and the tenth port f are connected to each other.

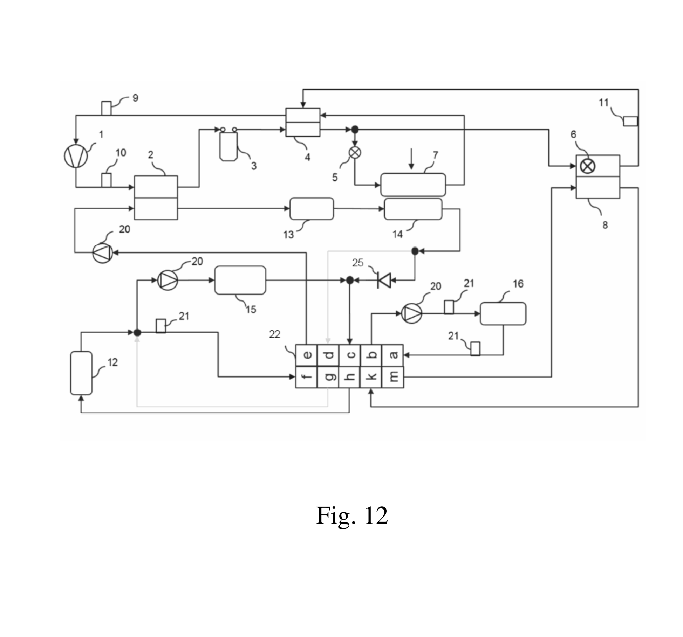

As shown in Fig. 12, the thermal management system is in an AC-heat exchanger mode. In this mode, a portion of refrigerant flows to the evaporator 7, and another portion flows through the third heat exchanger 8. The refrigerant flowing through the third heat exchanger 8 absorbs heat through evaporation at the second valve 6. In this mode, the ten-way valve 22 is in the first operating state, i.e. the first port c and the second port h are connected to each other, the third port b and the sixth port k are connected to each other, the fourth port a and the fifth port m are connected to each other, and the seventh port g is closed. In addition, the ninth port d is closed, and the eighth port e and the tenth port f are connected to each other. The refrigerant circuit cools the third working device 16 via the third heat exchanger 8, recovering heat of the third working device 16 to the refrigerant circuit.

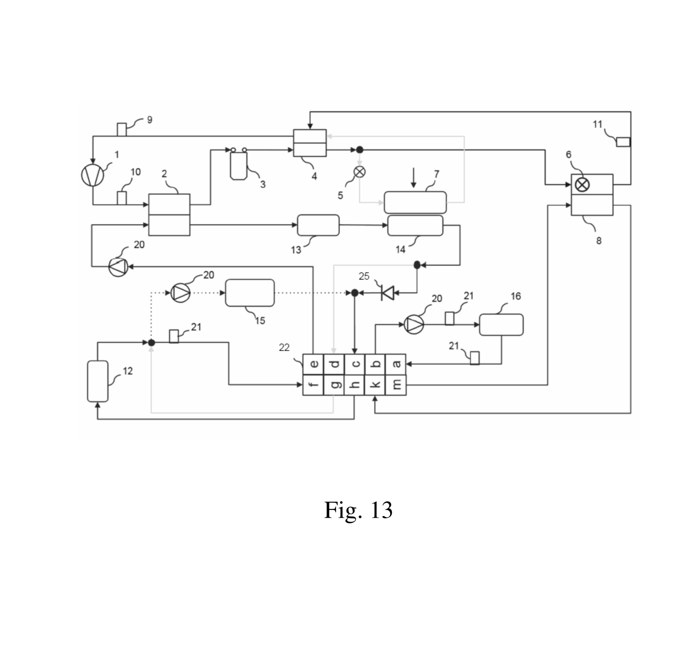

As shown in Fig. 13, the thermal management system is in a heat exchanger mode. In this mode, all of the refrigerant flows to the third heat exchanger 8; no refrigerant flows through the evaporator 7, i.e. the passenger cabin has no cooling demand, and the vehicle air conditioning is not operating. Generally, the battery of the vehicle is charged in this mode. In this mode, the ten-way valve 22 is in the first operating state, i.e. the first port c and the second port h are connected to each other, the third port b and the sixth port k are connected to each other, the fourth port a and the fifth port m are connected to each other, and the seventh port g is closed. In addition, the ninth port d is closed, and the eighth port e and the tenth port f are connected to each other. The third heat exchanger 8 is used to cool the third working device 16, recovering heat of the third working device 16 to the refrigerant circuit.

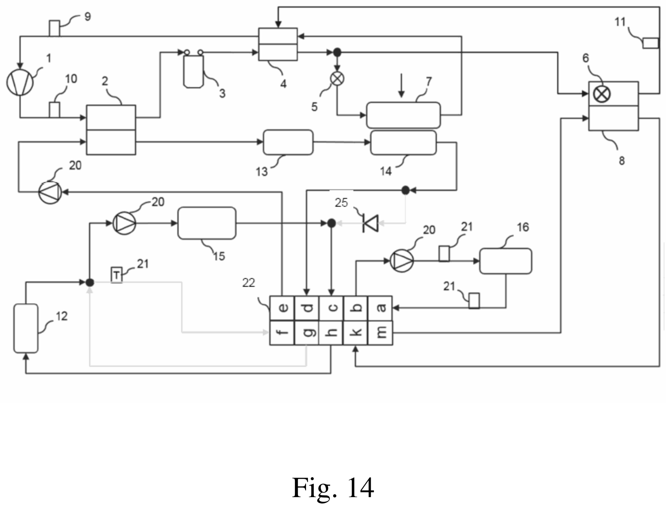

As shown in Fig. 14, the thermal management system is in a heat pump dehumidification mode. In this mode, a portion of refrigerant flows to the evaporator 7, and another portion flows through the third heat exchanger 8. For example, cooling liquid heated by the water heater 13 is conveyed to the warm air device 14. Air entering the passenger cabin undergoes the process of cooling and dehumidification in the evaporator 7 and is then heated by the warm air device 14. In this mode, the ten-way valve 22 is in the fourth operating state, i.e. the first port c and the third port b are connected to each other, the second port h and the sixth port k are connected to each other, the fourth port a and the fifth port m are connected to each other, and the seventh port g is closed. In addition, the tenth port f is closed, and the eighth port e and the ninth port d are connected to each other. Heat generated by the second working device 15 and the third working device 16 is transferred to the refrigerant circuit via the third heat exchanger 8. In addition, the third heat exchanger 8 can absorb heat from the outside via the radiator 12.

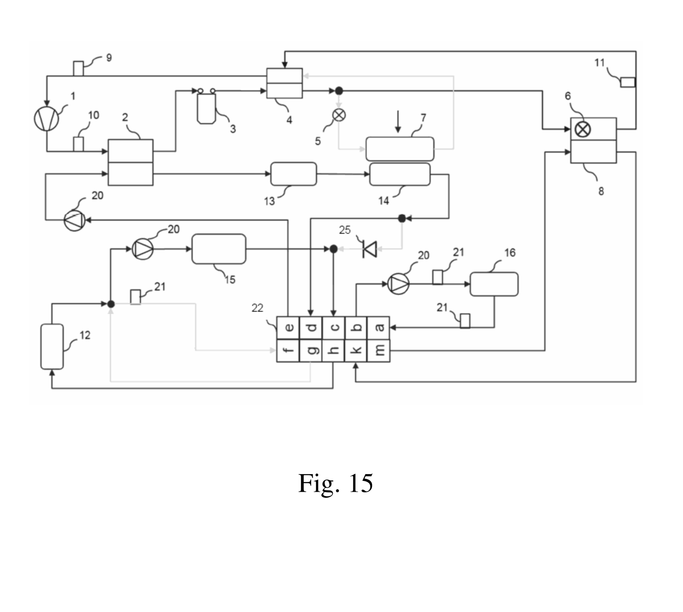

As shown in Fig. 15, the thermal management system is in a heat pump mode; this mode may also be called a motor waste heat recovery mode or a motor self-heating mode. In this mode, refrigerant only flows through the third heat exchanger 8; no refrigerant flows through the evaporator 7. In this mode, no fluid passes through the other one-way valve 25, and the ten-way valve 22 is in the fourth operating state; the first port c and the fifth port m are connected to each other, the second port h and the sixth port k are connected to each other, the fourth port a and the third port b are connected to each other, and the seventh port g is closed. The tenth port f may be closed. In addition, the eighth port e and the ninth port d are connected to each other. Heat generated by the second working device 15 comprising the electric motor can be transferred to the refrigerant circuit at the third heat exchanger 8. The third heat exchanger 8 can absorb heat from the outside via the radiator 12. In addition, cooling liquid in a circuit where the third working device 16 is located forms its own cycle.

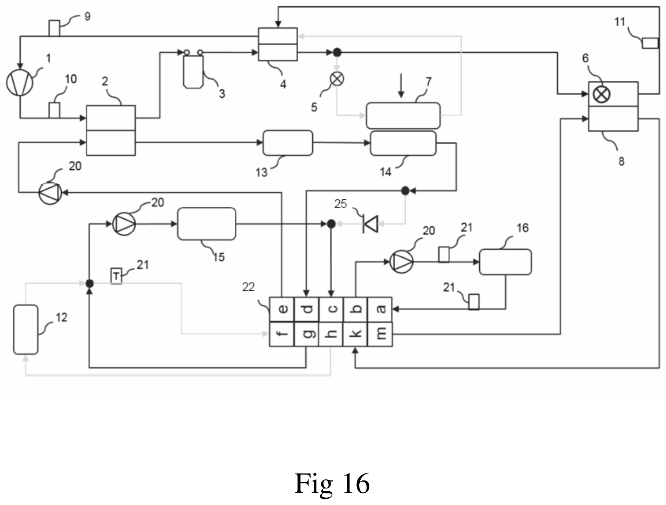

As shown in Fig. 16, the thermal management system is in a waste heat recovery mode. In this mode, refrigerant only flows through the third heat exchanger 8; no refrigerant flows through the evaporator 7. In this mode, the other one-way valve 25 can be closed, and the ten-way valve 22 is in the third operating state; the first port c and the third port b are connected to each other, the seventh port g and the sixth port k are connected to each other, the fourth port a and the fifth port m are connected to each other, and the second port h is closed. In addition, the eighth port e and the ninth port d are connected to each other. In this mode, the radiator 12 is bypassed. Heat generated by the second working device 15 comprising the electric motor and heat generated by the third working device 16 is transferred to the refrigerant circuit at the third heat exchanger 8.

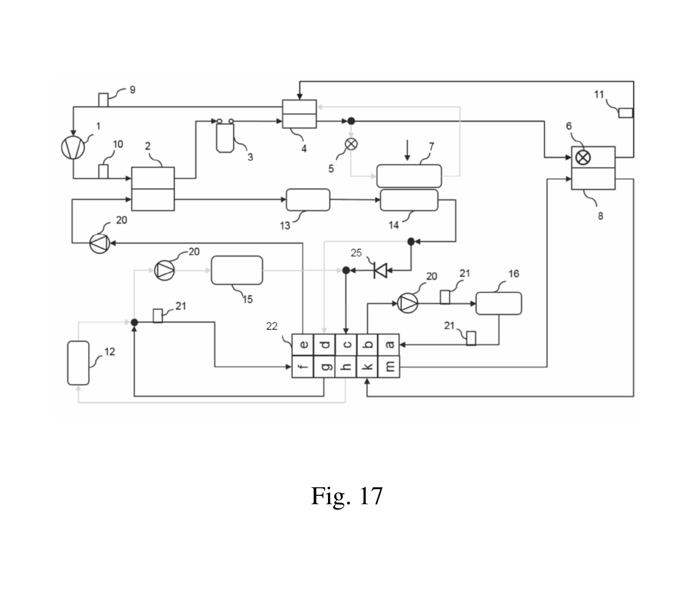

As shown in Fig. 17, the thermal management system is in an HVWH battery heating mode. In this mode, refrigerant only flows through the third heat exchanger 8; no refrigerant flows through the evaporator 7. In this mode, the ten-way valve 22 is in the third operating state; the first port c and the third port b are connected to each other, the seventh port g and the sixth port k are connected to each other, the fourth port a and the fifth port m are connected to each other, and the second port h is closed. In addition, the eighth port e and the tenth port f are connected to each other. Alternatively, the eighth port e and the tenth port f are connected to each other, and the eighth port e and the ninth port d are connected to each other. The radiator 12 is bypassed. Cooling liquid heated by the water heater 13 can flow to the third fluid circuit C3 to heat the third working device 16.

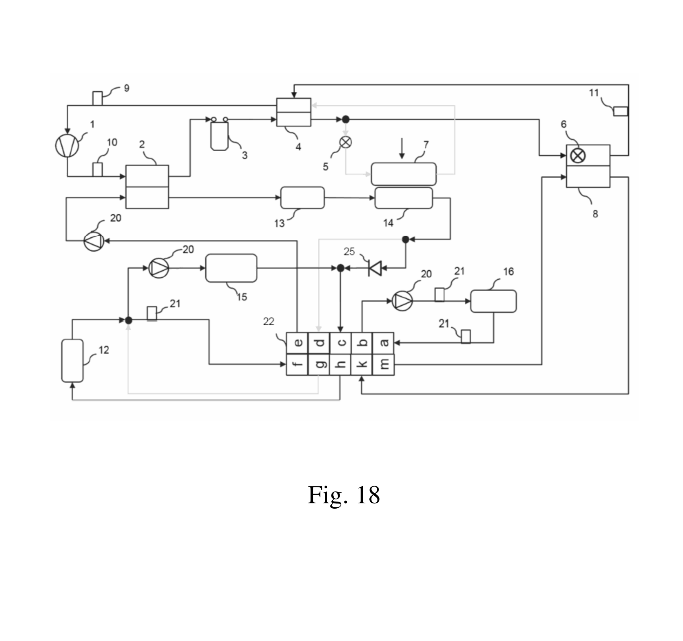

As shown in Fig. 18, the thermal management system is in a series connection mode. In this mode, refrigerant only flows through the third heat exchanger 8, with no refrigerant flowing through the evaporator 7; moreover, the second working device 15, the third working device 16, the third heat exchanger 8 and the radiator 12 are connected in series in a fluid circuit. In this mode, the ten-way valve 22 is in the second operating state, i.e. the first port c and the third port b are connected to each other, the second port h and the sixth port k are connected to each other, the fourth port a and the fifth port m are connected to each other, and the seventh port g is closed. In addition, the ninth port d is closed, and the eighth port e and the tenth port f are connected to each other. Heat generated by the second working device 15 comprising the electric motor and heat generated by the third working device 16 can be transferred to the refrigerant circuit at the third heat exchanger 8. In addition, the third heat exchanger 8 also absorbs heat from the outside via the radiator 12.

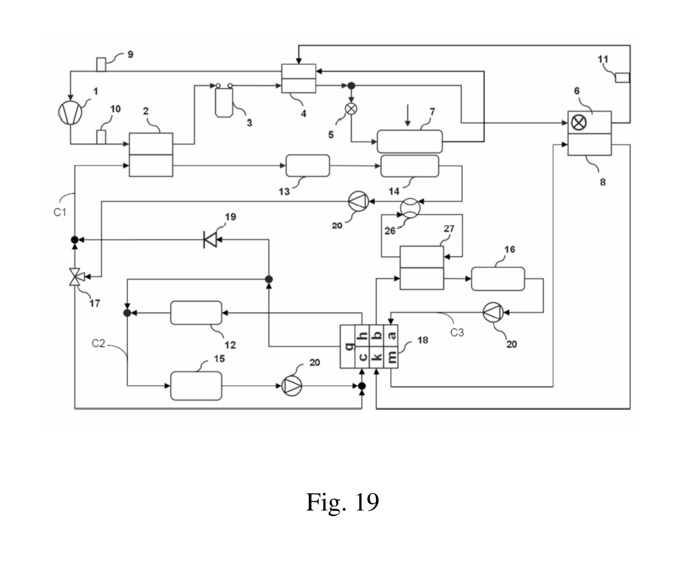

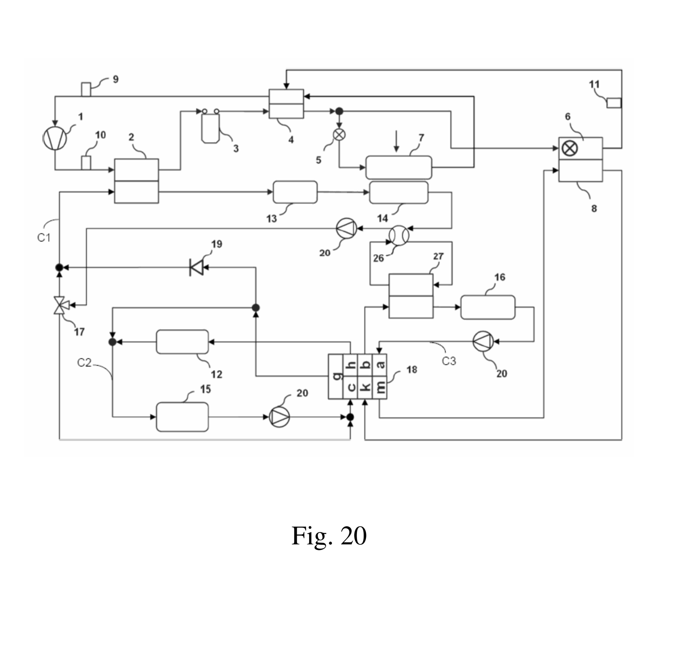

As shown in Figs. 19 and 20, the third fluid circuit C3 also has a coolant heat exchanger 27. The coolant heat exchanger 27 has a first flow path and a second flow path. The first flow path is connected in series in the third fluid circuit C3. Specifically, the coolant heat exchanger 27 is located between the third working device 16 and the third port b of the multi-way valve 18.

The second flow path of the coolant heat exchanger 27 is connected to the first fluid circuit C1 via a coolant four-way valve 26. In Fig. 19, the coolant four-way valve 26 is in a position that disconnects the second flow path of the coolant heat exchanger 27 from the first fluid circuit C1. In Fig. 20, the coolant four-way valve 26 is in a position that connects the second flow path of the coolant heat exchanger 27 to the first fluid circuit C1.

Coolant in the first flow path of the coolant heat exchanger 27 can undergo heat exchange with coolant in the second flow path. The first flow path of the coolant heat exchanger 27 can provide supplementary heating for coolant in the third fluid circuit C3, especially if the heating ability of the third heat exchanger 8 is inadequate.

The thermal management system in another embodiment of the present disclosure uses a ten-way valve to integrate the functions of a seven-way valve and a three-way structure, and can realize multiple thermal management modes through four operating states; thus, control of the thermal management system is simple, and the pipeline connections are greatly simplified.

As described above, the thermal management system of the present disclosure is able to realize a large number of modes using simple pipeline connections, and modes can be switched conveniently and freely. In addition, by using an intermediate heat exchanger in the refrigerant circuit, the thermal management system of the present disclosure improves cooling mode performance.
The technical features disclosed above are not limited to the disclosed combinations with other features, and those skilled in the art could make other combinations of technical features according to the objective of the invention, to achieve the objective of the present disclosure.

## Claims

1. A thermal management system for a vehicle, **characterized in that** the thermal management system comprises:
a first fluid circuit (C1), the first fluid circuit (C1) having a first heat exchanger (2);
a second fluid circuit (C2), the second fluid circuit (C2) having a heat-generating second working device (15) and a radiator (12); and
a third fluid circuit (C3), the third fluid circuit (C3) having a heat-generating third working device (16) and a third heat exchanger (8),
wherein the first fluid circuit (C1) is provided with a first connection structure (17) and a second connection structure (23) located downstream of the first connection structure (17), one port (173) of the first connection structure (17) being connected to a pipeline of the second fluid circuit (C2) at one side of the second working device (15), and one port of the second connection structure (23) being connected to a pipeline of the second fluid circuit (C2) at another side of the second working device (15), and
a multi-way valve (18) is provided between the second fluid circuit and the third fluid circuit, wherein:
a first port (c) of the multi-way valve (18) is connected to a pipeline at said one side of the second working device (15), a second port (h) of the multi-way valve (18) is connected via the radiator (12) to a pipeline at said other side of the second working device (15),
a third port (b) of the multi-way valve (18) is connected to one side of the third working device (16), a fourth port (a) is connected to another side of the third working device (16), a fifth port (m) is connected to one side of the third heat exchanger (8), a sixth port (k) is connected to another side of the third heat exchanger (8), and
a seventh port (g) of the multi-way valve (18) is connected to a pipeline at said other side of the second working device (15) and bypasses the radiator (12).

2. The thermal management system as claimed in claim 1, **characterized in that** the second connection structure comprises a three-way connector (24) and a one-way valve (19), one port (241) of the three-way connector being connected via the one-way valve (19) to a pipeline at said other side of the second working device (15), the one-way valve (19) allowing fluid to flow in one direction from the second fluid circuit toward the first fluid circuit.

3. The thermal management system as claimed in claim 1, **characterized in that** the multi-way valve (18) has a first operating state;
in the first operating state, the first port (c) and the second port (h) of the multi-way valve (18) are connected to each other, the third port (b) and the sixth port (k) of the multi-way valve (18) are connected to each other, the fourth port (a) and the fifth port (m) of the multi-way valve (18) are connected to each other, and the seventh port (g) of the multi-way valve is closed.

4. The thermal management system as claimed in claim 1, **characterized in that** the multi-way valve (18) has a second operating state;
in the second operating state, the first port (c) and the third port (b) of the multi-way valve (18) are connected to each other, the second port (h) and the sixth port (k) of the multi-way valve (18) are connected to each other, the fourth port (a) and the fifth port (m) of the multi-way valve (18) are connected to each other, and the seventh port (g) of the multi-way valve (18) is closed.

5. The thermal management system as claimed in claim 1, **characterized in that** the multi-way valve (18) has a third operating state;
in the third operating state, the first port (c) and the third port (b) of the multi-way valve (18) are connected to each other, the seventh port (g) and the sixth port (k) of the multi-way valve (18) are connected to each other, the fourth port (a) and the fifth port (m) of the multi-way valve (18) are connected to each other, and the second port (h) of the multi-way valve (18) is closed.

6. The thermal management system as claimed in claim 1, **characterized in that** the multi-way valve (18) has a fourth operating state;
in the fourth operating state, the first port (c) and the fifth port (m) of the multi-way valve (18) are connected to each other, the second port (h) and the sixth port (k) of the multi-way valve (18) are connected to each other, the fourth port (a) and the third port (b) of the multi-way valve (18) are connected to each other, and the seventh port (g) of the multi-way valve (18) is closed.

7. The thermal management system as claimed in any one of claims 1 - 6, **characterized in that** the first connection structure (17) and the multi-way valve (18) are integrated as a ten-way valve (22).

8. The thermal management system as claimed in claim 7, **characterized in that** first to seventh ports of the ten-way valve (22) correspond to the first to seventh ports of the multi-way valve.

9. The thermal management system as claimed in claim 8, **characterized in that** the ten-way valve (22) further comprises an eighth port (e), a ninth port (d) and a tenth port (f), the eighth port (e) and the ninth port (d) being connected to the first fluid circuit, and the tenth port (f) being connected to a pipeline of the second fluid circuit at said other side of the second working device (15).

10. The thermal management system as claimed in claim 1, **characterized in that** the first heat exchanger (2) is a water-cooled condenser of a refrigerant circuit of the thermal management system.
